# EUROPEAN PATENT APPLICATION

(11) **EP 3 007 121 A1**
(43) Date of publication of application: **13.04.2016**
(21) Application number: 14003477.8
(22) Date of filing: 09.10.2014
(51) Int. Cl.: G06Q 20/22, G06Q 20/32, G06Q 20/36

(54) **Selection application**

(71) Applicant: Giesecke & Devrient GmbH, 81677 München (DE)
(72) Inventor: Tea, Vui Huang, SE-12061 Stockholm (SE)

(57) **Abstract**

In a method on a mobile end device for selecting an application from a plurality of applications for carrying out a transaction with a terminal, a transaction request is received from the terminal (S1). Thereupon an execution of a transaction is started using a first application, for the purpose of obtaining a parameter (S2) defining the transaction, said parameter then being obtained by the first application (S3). When the parameter has been obtained, the transaction is aborted (S4). Then it is checked (S5) which of the applications is arranged to currently carry out the transaction defined by the obtained parameter. Thereafter the plurality of the applications is limited to a subset of those applications that are respectively arranged to carry out the transaction defined by the obtained parameter (TS6.1). Alternatively, at least one of the applications is modified to the effect that, after being modified, it is arranged to carry out the transaction defined by the obtained parameter (TS6.2).

## Description

The present invention relates to a method on a mobile end device for selecting an application from a plurality of applications for carrying out a transaction with a terminal, and to a mobile end device and to a security element for a mobile end device having a selection application which is arranged to control such a method.

Contactless readers enable customers to wave or tap their cards at respective terminals in order to carry out a transaction without further interaction, such as inputting a PIN, signing or the like. An example is contactless payment using a bank card at a point of sale (POS).

Current mobile devices, e.g. Android powered devices, that offer NFC functionality already support NFC card emulation. In most cases, the card is emulated by a separate chip in the device, called a secure element. Many SIM/ UICC cards provided by wireless carriers also contain a secure element. When NFC card emulation is provided using a secure element, the card to be emulated is provisioned into the secure element on the device through an application running under the operating system (OS) of the device. Then, when the user holds the device over an NFC terminal, the NFC controller in the device routes all data from the reader directly to the secure element. The secure element itself performs the communication with the NFC terminal, and no application based on the OS is involved in the transaction at all.

Current operating systems for the above-mentioned devices introduce an additional method of card emulation that does not involve a secure element, called host-based card emulation (HCE). This allows any application running under the OS to emulate a card and talk directly to the NFC reader. When an NFC card is emulated using host-based card emulation, the data is routed to the host CPU on which the application is running directly, instead of routing the NFC protocol frames to a secure element.

Currently, the majority of contactless cards only contain one payment application (PSE), while NFC enabled mobile devices are expected to contain multiple PSEs of different brands. In a contactless transaction such as EMV ("Europay, MasterCard and Visa", a global standard for inter-operation of integrated circuit cards and IC card capable point of sale (POS) terminals and automated teller machines (ATMs), for authenticating credit and debit card transactions), the user currently has to define a default PSE to be used or manually select the PSE to be used for a specific transaction. This is both time-consuming and error-prone, e.g. in cases when the default or manually selected payment applet (PSE) does not have a sufficient balance for the payment amount presented by the terminal.

Therefore, it is the object of the present invention to take account of the above-mentioned disadvantages and to propose a method for automatically selecting an appropriate application from a plurality of applications for carrying out a respective transaction.

This object is achieved by a method, a mobile end device and a security element having the features of the independent claims. Advantageous embodiments and developments are stated in the independent claims.

A preferred embodiment of a method on a mobile end device for selecting an application from a plurality of applications for carrying out a transaction with a terminal comprises the following steps:

A first transaction request is received from the terminal. With this transaction request the terminal signals its readiness to carry out a transaction with the end device.

In response to the first transaction request, in a further step the execution of the transaction is started using a first application from the plurality of the applications, for the purpose of obtaining a parameter defining the transaction.

The plurality of the applications can be kept for example in the form of a list of applications. This list is normally dynamically alterable. The method can generate the list itself or use an existing list which has been formed in another way, for example by an application executed on the end device.

While each of the applications from the plurality of the applications is in principle arranged to execute a transaction with the terminal, the parameter to be obtained defines more closely a transaction to be concretely executed, and it is possible that one or more of the applications of the list is currently not arranged to execute the transaction, on account of the parameter.

Concretely, as a transaction, for example a payment transaction can be carried out between the mobile end device and the terminal, preferably contactlessly. An application from the plurality of the applications is then in principle arranged to carry out a payment transaction with the terminal. That is, the application implements an operation in electronic funds transfer. A parameter defining the transaction could be for example the size of a payable amount in connection with the concrete transaction. In this case, it is possible that individual ones of the plurality of the applications in principle arranged for electronic payment currently could not carry out the transaction, since a limit currently available to them is lower than the amount that the concrete transaction requires.

In other words, each of the applications of the plurality of the applications satisfies a "first condition" which distinguishes it from an arbitrary application, for example the suitability in principle for use in electronic funds transfer. In the following steps of the method it is to be checked which of the applications also satisfies a "second condition", namely, being currently arranged to carry out a concrete transaction defined by a certain parameter specified on the part of the terminal, by way of example, being able to access an account with sufficient funds. In alternative application contexts the "first condition" could consist for example in supporting an authentication operation. The "second condition" could then consist in having access to sufficient proof of authentication, for example keys, certificates, biometric data sets, etc.

Again referring to the preferred embodiment of the inventive method, in a further step the corresponding parameter is now obtained by the first application. Normally the first application will extract the parameter from a transaction message transmitted on the part of the terminal, or the like.

After the parameter is obtained by the first application, the transaction is aborted. The aborting of the transaction is preferably effected unconditionally, i.e. in particular independently of whether or not the first application would have been able to execute the transaction defined by the parameter.

The aborting step is also effected consciously in the sense that it is not caused by any external circumstances or circumstances of the concrete method execution or effected by chance or unplanned. In other words, the step of aborting the transaction after the parameter is obtained is a firmly planned step of the present method, this step not being subject to any further conditions or circumstances.

In a further step of the method it is now checked which of the applications from the plurality of the applications is actually arranged to currently carry out the concrete transaction defined by the obtained parameter. That is, it is checked which of the applications also satisfies the "second condition".

Finally, depending on the check in the preceding step, the plurality of the applications is limited to a subset of those applications that are respectively arranged to currently carry out the transaction defined by the obtained parameter. Limiting the plurality of the applications corresponds for example to deleting from a previously mentioned list those applications that currently could not carry out the transaction according to the obtained parameter. Referring to applications in funds transfer, all those applications would be deleted from the list that currently do not have sufficient funds for paying an amount specified by the parameter.

Alternatively, for example in case a limitation of the prescribed type would lead to an empty list, at least one application from the plurality of the applications can be modified to the effect that, after being modified, this application is arranged to carry out the transaction defined by the obtained parameter.

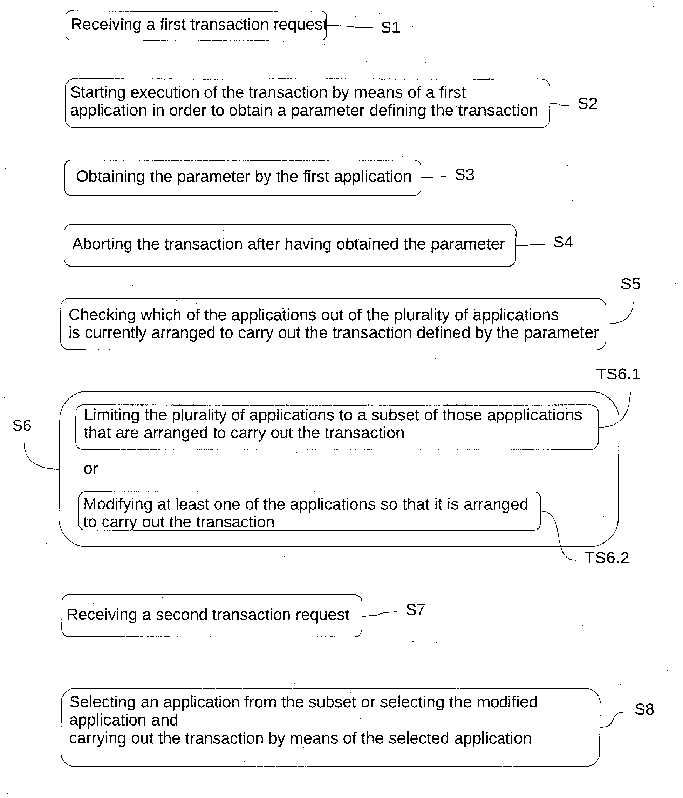

Referring to the hereinabove described example of a payment application that can only access a limited amount, a modification could consist in the drawing amount of the application being increased, or "topped up", to such a size as to enable the payment of a payable amount defined by the parameter. Topping up the amount can be effected for example by transferring amounts that are available to the further applications from the plurality of the applications to the "account" of the modified application.

Each of the applications of the subset that arises from limiting the plurality of the applications, or each of the modified applications, is therefore subsequently able to carry out that transaction that is defined by the obtained parameter. It can thus be guaranteed that the transaction is carried out successfully upon a new attempt when an arbitrary application from the subset or an accordingly modified application is now selected for carrying out the transaction.

According to a preferred embodiment, the method comprises the following further steps. On account of the fact that the transaction, according to the hereinabove described embodiment, has been aborted on the part of the end device for reasons not recognizable to the terminal, the terminal will normally again attempt to carry out the transaction in the same manner, i.e. in particular defined by the same, unchanged parameter. Therefore, in a further step the end device receives from the terminal a corresponding second transaction request, which still relates to the same, previously aborted transaction, being in particular defined by an unchanged parameter.

This transaction is then, in response to the second transaction request, carried out by means of an application from the subset of the applications or by means of the modified application which, for the hereinabove described reasons, are respectively arranged to carry out the concrete transaction defined by the obtained parameter.

According to a further preferred embodiment of the method, the first application for obtaining the parameter is selected from the plurality of the applications arbitrarily. In other words, the first application, referring to the hereinabove described example, can be selected as an ordinary payment application. According to this embodiment, the aborting of the transaction will normally not be effected by the first application itself, but by a separate aborting instance. The aborting instance is arranged to monitor the executing of the transaction by the first application and to abort the transaction as soon as the first application has obtained the parameter from the terminal.

According to an alternative preferred embodiment of the method, a specific application can be provided as the first application for obtaining the parameter. This application need not necessarily be arranged to carry out a transaction with the terminal completely. It is sufficient that this specific application is arranged to start an execution of a transaction with the terminal and to obtain the parameter. According to this embodiment, the specific application can itself be arranged to abort the transaction as soon as it has obtained the parameter.

A preferred embodiment of a security element for a mobile end device is characterized by a selection application that is executable on the security element. This selection application is arranged to control a hereinabove described method on the part of the end device into which the security element can be integrated.

Accordingly, an inventive mobile end device comprises a selection application that is executable on the end device and arranged to control a hereinabove described method for carrying out the transaction with the terminal.

An application from the plurality of the applications can be arranged to be executed on the mobile end device itself, on a security element of the end device or else on an arbitrary device that is employable with the end device over a data communication network. That is, such an application can also be present "in the cloud".

The present invention will hereinafter be described by way of example with reference to the attached drawing, which shows steps of a preferred embodiment of the inventive method.

Hereinafter an inventive method on a mobile end device for selecting an application from a plurality of applications for carrying out a transaction with a terminal will be described with respect to a contactless payment transaction. The mobile end device is e.g. a smartphone, tablet or the like. On the mobile device there is running under the respective OS of this device a specific selection application which implements the inventive method. The plurality of applications are represented by a plurality of payment applets or applications (PSE), which may reside on the mobile device, on a security element of the mobile device or in the cloud. Respective security elements are e.g. a SIM/UICC card, a virtual SIM/UICC (vSIM) or a so-called "trusted execution environment" (TEE).

In a contactless EMV transaction flow, the terminal has a list containing the Application Identifier (AID) of every EMV application that it is configured to support, and the terminal must generate a candidate list of applications that are supported by both the terminal and the card. According to the state of the art, there is provided on the mobile device an application called PPSE (Proximity Payment System Environment), which automatically detects which payment applets (PSE) are activated on the device. That is, the PPSR generates and updates the list of available payment applications on the mobile end device.

Referring to an ordinary payment transaction, the terminal begins by sending a SELECT PPSE command with the standard-defined value of "2PAY.SYS.DDF01" to the NFC controller of the mobile device, and the NFC controller returns File Control Information (FCI) of the PSE selected by the user on their mobile device. In other words, according to the state of the art, it is up to the user of the mobile device to manually select the payment application to be used in the transaction.

The role of the inventive selection application, which implements the inventive method, is to automatically detect and select a payment application (PSE) from the list of available payment applications which is arranged to currently carry out the transaction defined by the terminal, by means of a specific parameter. Alternatively, the selection application may also be arranged to modify at least one of the payment applications so that, after being modified, the payment application is arranged to carry out the transaction.

As an example, this transaction-defining parameter is an amount presented by the terminal, and a payment application that is currently arranged to carry out the transaction is a payment application that has a sufficient balance for paying the respective amount. In this context, e.g. in case none of the payment applications has a sufficient balance, a payment application can be modified so as to ensure that the payment application has the necessary credit to meet the payment amount, e.g. by automatically topping up an account corresponding to the payment application, by automatically merging different accounts, by trading or otherwise ensuring the necessary credit.

Hereinafter the selection application according to the present invention will also be referred to as a "Host-based Card Emulation Proximity Payment System Environment applet", or "HCE PPSE applet". The traditional PPSE may be adapted to include the functionality of the HCE PPSE, namely, the features of automatically selecting an appropriate application. Alternatively, the HCE PPSE may act independently of the traditional PPSE and e.g. only access and modify the list of applications originally generated by the PPSE.

In other words, the invention introduces a HCE PSSE service that is a virtual PPSE taking the place of "2PAY.SYS.DDF01". The payment application (PSE) can be in the cloud or on a secure card element on the phone. For the latter, this coexistence is based on a principle called "AID routing": the NFC controller on the phone keeps a routing table that consists of a (finite) list of routing rules. Each routing rule contains an AID and a destination. The destination can be either the host CPU (where the HCE PSSE is running), or a connected secure element.

The inventive method, implemented by the HCE PPSE, responds to a transaction request (cf. Fig., step S1) of the terminal (e.g. a SELECT PPSE command) by starting execution of the transaction by means of a first application (cf. Fig:, step S2), e.g. by returning the File Control Information (FCI) for the first application, which may be a specifically arranged application (referred to as a "dummy PSE"). The terminal then selects this first application on the card and provides the dummy PSE, i.e. the first application, with parameters defining the transaction, e.g. with any data that it requests in the PDOL (Processing Data Object List). The key function of the dummy PSE is to obtain the "Amount Authorized" from the terminal (cf. Fig., step S3) which is the relevant parameter of the payment transaction. Once it achieves its objective, it rejects the transaction (cf. Fig., step S4). The dummy PSE will utilize offline data authentication, which allows the terminal to authenticate the card with every transaction and without the need to go online to the issuer for approval.

When the HCE PPSE obtains the transaction-defining parameter, in the example the "Amount Authorized", from the first application (i.e. the dummy PSE), it knows how much credit the user needs to authorize the transaction. The HCE PPSE then checks (cf. Fig., step S5), which of the payment applications is currently arranged to carry out the transaction that is defined by this parameter. To this end, the HCE PPS queries the credit/debit balance of all PSEs from the cloud/card element. It processes the list according to a preset user preference (composed of various static/dynamic conditions) and possibly finds a PSE that has a sufficient balance. The list of active payment applications can then be limited to those payment applications that currently have a sufficient balance (cf. Fig., step TS6.1).

If HCE PPSE is not able to find a PSE that has a sufficient balance, the HCE PPSE will modify (cf. Fig., step TS6.2) at least one of the payment applications accordingly. To this end, the HCE PPSE may perform automatic top-up of a selected PSE according to a preset user preference (composed of various static/dynamic conditions). The funding source of the top-up is also according to a preset user preference (composed of various static/ dynamic conditions). The top-up can be:
- deducted from the mobile prepaid credit
- credited to a postpaid account
- in the event that those funding sources are also exhausted, the top-up can also be obtained from a payday loan (also known as an "SMS loan") subject to a maximum cumulative limit set by the user
- a consolidation service to pool funds from other PSEs to one PSE before directing the terminal to that PSE
- the user can link various loyalty points or other closed-loop credits points that have the monetary value equivalent to the payment amount. These can be converted to monetary credits for top-up at a rate favorable to the HCE PPSE operator, or at a fixed/tiered exchange rate, etc.

When the HCE PPSE next receives a SELECT PPSE from the terminal (cf. Fig., step S7), the HCE PPSE selects one of the applications that have a sufficient balance in order to carry out the transaction (cf. Fig., step S8). In other words, referring to the concrete example, the HCE PPSE returns the File Control Information (FCI) for the (topped-up) selected PSE with a sufficient balance. The terminal then selects the application on the card and proceeds with the real transaction as per normal.

An exemplary flow description can be found hereinafter:
1. User launches mobile wallet, selects option to activate auto-selection and top-up in HCE PPSE and enters password
2. User waves handset over terminal
3. Terminal sends SELECT PPSE command with ID "2PAY.SYS.DDF01"
4. HCE PPSE returns to terminal the FCI including AID of dummy PSE
5. Payment transaction with terminal
6. Terminal must be configured to accept AID of dummy PSE (In order to avoid modifying or updating the terminal to accept the AID of the dummy PSE, an arbitrary payment application can be used as the "first application", i.e. in order to obtain the relevant parameter ("Amount Authorized"). Aborting the transaction (cf. step 9 hereinafter) can then be carried out by a separate aborting instance which is arranged to monitor the first application and to abort the transaction as soon as the first application has obtained the relevant parameter).
7. Dummy PSE performs off-line transaction to get transaction amount in CDOL. (A CDOL (Card Risk Management Data Object List) is a list of data that the dummy PSE requires during Card Action Analysis. The terminal uses the DOL processing rules to format the requested data and then sends them to the dummy PSE in the GENERATE AC (Generate Application Cryptogram) requests.)
8. Dummy PSE rejects transaction
9. HCE PPSE checks list of PSE payment applets to establish which has balance to pay, round-robin or by user's preferred list, or by association of location or merchant
10. Balance is checked via external API, or tracked internally, e.g. Read DF51 (last transaction: xxx€, ok)
11. If there is not enough money, HCE PPSE does auto top-up of card based on user's preferred list, by least amount needed to top up, etc.
12. Top-up funding is acquired by borrowing from prepaid phone credit, or charging to postpaid phone bill, and/ or using payday loan
13. Top-up source list is short-listed by credit ceiling remaining, or user setting of upper limit
14. Top-up source selection is based on user's preferred list, or lowest cost/interest rate, etc. These can be based on a fixed rate, or queried live via an API, etc.
15. Verify top-up of credits has been performed to designated/selected PSE
16. When terminal gets transaction reject from HCE PPSE, it should issue another SELECT PPSE command and suppress "PROCESSING ERROR" that is displayed to cardholder or attendant when card is removed before processing of transaction is complete or when transaction is aborted because of power failure, or system or terminal has malfunctioned, showing e.g. communication errors or time-outs
17. When terminal issues SELECT PPSE, HCE PPSE returns chosen/ topped-up PSE:
18. After transaction, NFC controller sends HCI "Transaction" event to wallet
19. Wallet reads last transaction
20. Wallet resets parameters (ACK + transaction context)
21. Wallet selects CRS (Contactless Registry Services) and sets status to deactivated
22. Wallet indicates which card was used. If top-up was used, wallet also indicates how much was topped up to that card from where and at what cost. For example:
   BANK ABC DEBIT CARD was used for payment of $100.
   Original balance of $80 was topped up with $20 credit
   from your MOBILE POSTPAID account.

The following advantageous results, among others, can be achieved by the inventive method. Consumers can pay confidently without having to consider which funding source to use, i.e. the method remains transparent to the user, the appropriate payment application is selected automatically, without any need for user input. This also allows for speedier checkouts and secure transactions - and avoids 'bouncing' checks.

## Claims

1. A method on a mobile end device for selecting an application from a plurality of applications for carrying out a transaction with a terminal, comprising the steps of:
- receiving a first transaction request from the terminal (S1);
- starting the execution of the transaction using a first application from the plurality of applications for the purpose of obtaining a parameter defining the transaction (S2);
- obtaining the parameter by the first application (S3);
- aborting the transaction after the parameter is obtained (S4);
- checking which of the applications is arranged to carry out the transaction defined by the obtained parameter (S5);
- limiting the plurality of the applications to a subset of those applications that are respectively arranged to carry out the transaction defined by the obtained parameter (TS6.1),
or
- modifying at least one of the applications of the plurality of the applications to the effect that, after being modified, it is arranged to carry out the transaction defined by the obtained parameter (TS6.2).

2. The method according to claim 1, **characterized by** the steps of:
- receiving a second transaction request from the terminal (S7);
- carrying out the transaction by means of an application from the subset of the applications or by means of the modified application (S8).

3. The method according to claim 1 or 2, **characterized in that** the first application is selected from the plurality of the applications arbitrarily.

4. The method according to claim 1 or 2, **characterized in that** there is selected from the set of the applications as the first application a specific application which is only arranged to obtain the parameter.

5. The method according to any of claims 1 to 4, **characterized in that** the first application aborts the transaction.

6. The method according to any of claims 1 to 4, **characterized in that** the transaction is aborted by an aborting instance which monitors the executing of the transaction by the first application.

7. The method according to any of claims 1 to 6, **characterized in that**, as a transaction, a payment transaction is carried out between the mobile end device and the terminal contactlessly.

8. The method according to any of claims 1 to 7, **characterized in that** an application from the plurality of the applications is arranged to carry out a payment transaction with the terminal.

9. The method according to any of claims 1 to 8, **characterized in that** an application from the plurality of the applications is arranged to be executed on the mobile end device, on a security element of the mobile end device or on a device that is connectable to the mobile end device over a data communication network.

10. The method according to any of claims 1 to 9, **characterized in that**, as a transaction, a payment transaction is carried out, and that the parameter defining the transaction is the size of a payable amount.

11. The method according to any of claims 1 to 10, **characterized in that** the transaction is aborted unconditionally after the parameter is obtained.

12. A security element for a mobile end device, **characterized by** a selection application that is executable on the security element and arranged to control a method according to any of claims 1 to 11.

13. A mobile end device, **characterized by** a selection application that is executable in the mobile end device and arranged to control a method according to any of claims 1 to 11.
